# EUROPEAN PATENT SPECIFICATION

(11) **EP 2 322 387 B1**
(45) Date of publication and mention of the grant of the patent: **09.03.2016**
(21) Application number: 10004729.9
(22) Date of filing: 05.05.2010
(51) Int. Cl.: B60R 19/18

(54) **Crash management system**
Crash-Management-System
Système de gestion de collision

(30) Priority: 11.11.2009 NO 20093323
(43) Date of publication of application: 18.05.2011
(73) Proprietor: Benteler Automobiltechnik GmbH, 33102 Paderborn (DE)
(72) Inventor: Clausen, Edvin, List, 6200 Arabenraa (DK); Hübel, Claus, 81827 München (DE); Wendt, Sascha, 24939 Flensburg (DE)
(74) Representative: Griepenstroh, Jörg

(56) References cited:
- EP-A1- 0 857 619
- WO-A1-00/46074
- DE-A1-102005 039 489
- DE-A1-102007 032 030
- US-A1- 2003 160 466

## Description

The invention relates to an impact absorbing member that includes at least one supporting member. More specific, the invention relates to a crash management system including at least one cross-member and two crash absorbing components in one same and single part.

Still further, the invention relates to a new crash management system for cars, particularly passenger cars, however also trucks and SUV's. The system is provided for the protection of the front of cars in frontal impacts, can however also be used to protect the rear end of the cars.

The invention relates to systems for transferring forces and absorbing crash energy for protecting the vehicle main structure but also for systems for protecting pedestrians being hit by a vehicle during a collision.

The invention also enables crash systems which have cross-members that are both wider and higher than today to be used, giving better crash protection in many crash situations.

The invention further relates to a system where the main absorbing crash system can be combined with other crash protecting systems.

The present invention has the advantage of having a geometry which makes that the system has an improved strength and stiffness to weight ratio as compared to a traditional crash management system (mechanically assembled crash boxes and cross-member(-s) built as bumper beam(-s)) and also offers some advantages to current automobile packaging. Further, the invention represents a cost-efficient solution as plural process steps related to assembly of several sub-components can be avoided.

The principle of making an integrated cross-member with crash boxes has been disclosed previously, for instance in EP 1154915 B1, DE 20 2005 016 564 U1 or WO 00/46074 A1.

It is also known from the state of the art to integrate two cross-members, wherein a first cross-member is located inside or in front of a second cross-member (DE 10 2007 032 030 A1, DE 10 2005 039 489 A1).

However new crash protection demands such as the new IIHS demands, together with more severe packaging demands due to the current need for smaller and more energy-efficient cars, has since increased the need for further improvements.

A key parameter to achieve the performances required is the geometry of the system, which again is achieved by the new forming.

The objective furthermore is to achieve good performance in a variety of crash situations and crash speeds, ranging from low speed impacts at walking pace to severe high speed ones.

Some of the objects which the car is meeting in a crash, are "soft", meaning that they will also deform in the crash. In this case it is very beneficial to provide an enlarged crash system. When such as system is wider and / or higher than before, the crash area is larger, which is beneficial for a number of reasons (less aggressive interaction, higher crash force and more efficient energy dissipation may be introduced earlier in the crash).

At the same time the invention has the object of further improving the crash towards hard objects such as walls, poles and so on. This is related to the structure of the crash system which is now more homogenous than earlier (les parts, less assembly interfaces), giving an improved force transfer between the parts as well as less risk of separation between the parts in the interfaces between them during severe crash deformations.

In addition, the scope is to achieve this together with:
- not impairing "packaging room" in the vehicle, thus providing space and fixing arrangements for other objects and functions such as lights, sensors and ducting for cooling air and so on.

A further objective is to achieve a product that will allow air from the front to pass through /around the crash management system in a way that the vehicle can be cooled efficiently.

It is understood, that when said objects are achieved, not only will the damage and dangers due to crashes be diminished, but other desirable effects will be achieved, such as reducing the overhang of the car, lessen the need for strength/stiffness of the main car body and so on.

This again reduces the weight and bulk of the car, which again is very desirable, and may also influence positively the cost of producing and operating (running) the car.

The invention shows the following advantages:
- reduction of components
- reduction of assembly operations
- function integration
- possibilities of overall weight reduction
- optimize airflow
- match future vehicle styling
- Flexible design to meet various requirements

These and further advantages can be achieved with the invention as defined in the accompanying claims.

In the following, the invention shall be further described by Figures and examples where:
- Fig. 1: discloses a first embodiment of a crash management system, seen from above,
- Fig. 2: discloses a side view of the embodiment shown in Fig. 1, along line A-A,
- Fig. 3: discloses the aforementioned crash management system in a perspective view,
- Fig. 4 and 5: disclose two typical embodiments of cross-section configurations of a crash management system,
- Fig. 6: discloses a second possible example embodiment of a crash management system,
- Fig. 7: discloses a cross-section configuration of the crash management system of Fig. 6,
- Fig. 8: discloses a third possible example embodiment of a crash management system,
- Fig. 9: discloses a cross-section configuration of the crash management system of Fig. 8,
- Fig. 10: discloses a fourth possible example embodiment of a crash management system,
- Fig. 11: discloses a cross-section configuration of the crash management system of Fig. 10,
- Fig. 12: discloses a brief possible overview of the manufacturing process of one crash management system in accordance to the present invention, starting from an extruded section,
- Fig 13: discloses a crash management system similar to that of Fig. 8, in a first embodiment adapted for ventilation,
- Fig. 14: discloses in an enlarged view, a cross-section configuration of the crash management system shown in Fig. 13,
- Fig. 15: discloses in an enlarged view, a first alternative cross-section configuration of the crash management system shown in Fig. 13,
- Fig. 16: discloses in an enlarged view, a second alternative cross-section configuration of a crash management system similar to that shown in Fig. 13, however having two intermediate cross-members 103, 103',
- Fig. 17: discloses two crash management systems arranged at different vertical levels,
- Fig. 18: discloses a cross-section through a crash management system having absorbing components attached thereto,
- Fig. 19: discloses a cross-section through a crash management system having absorbing components integrated therein,
- Fig 20: discloses a crash management system similar to that of Fig. 8, in a second embodiment adapted for ventilation,
- Fig 21: discloses a crash management system similar to that of Fig. 8, in a third embodiment adapted for ventilation.

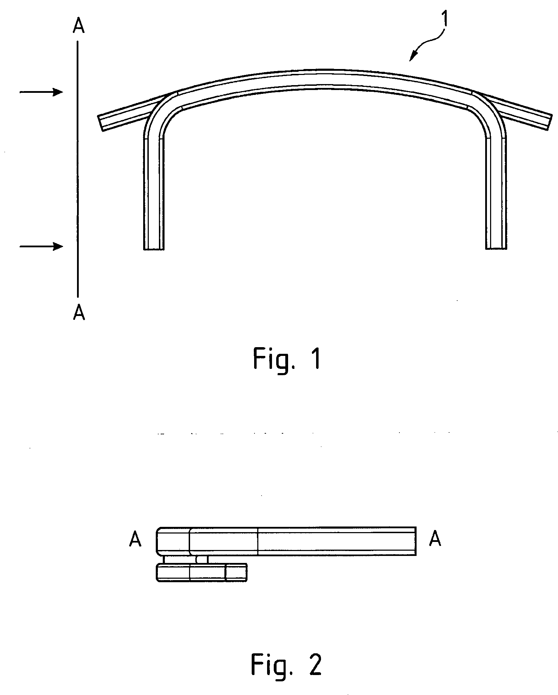

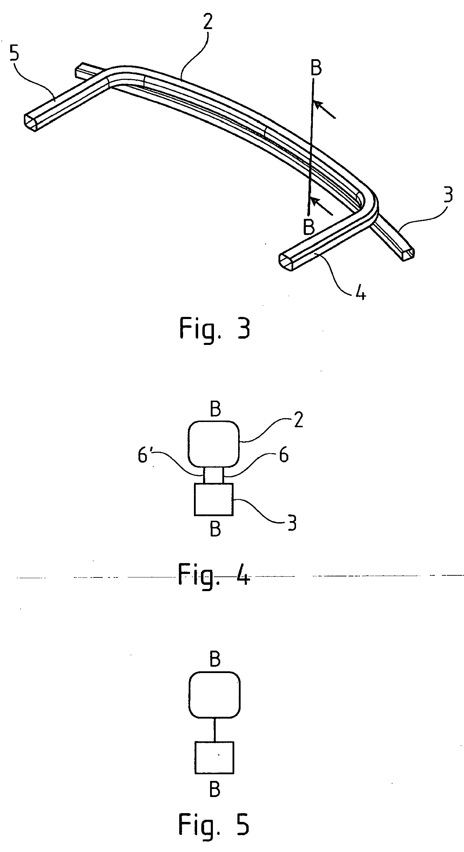

As shown in Fig. 1, there is disclosed a first embodiment of a crash management system 1 seen from above. Fig. 2 discloses a side view of the system 1, along line A-A. Fig. 3 discloses the aforementioned crash management system in a perspective view, while Fig. 4 discloses the cross-section configuration of the crash management system, through a line B-B in Fig. 3. In Fig. 5, there is shown an alternative cross section configuration.

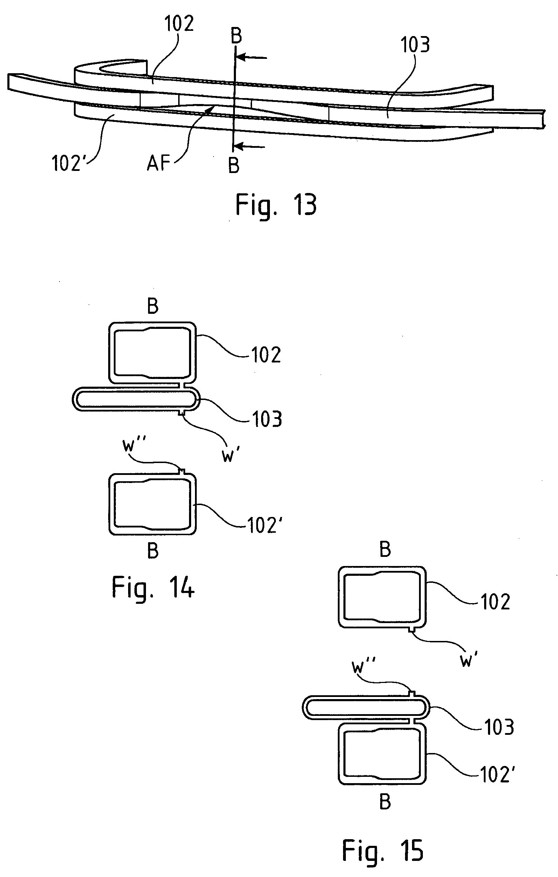

Referring to Fig. 3, the system has a first cross-member 2 and crash absorbing components or crash boxes 4, 5 integrated in one same and single part. Further there is shown a second cross-member 3, which is also integrated to the first cross-member 2. With reference to Fig. 3, it is shown that cross-members 2 and 3 are integrated by two parallel webs 6, 6' that in fact represent one additional hollow section. In other embodiments such connection between cross-members 2, 3 could be provided by one single web, as in the embodiment shown in Fig. 13.

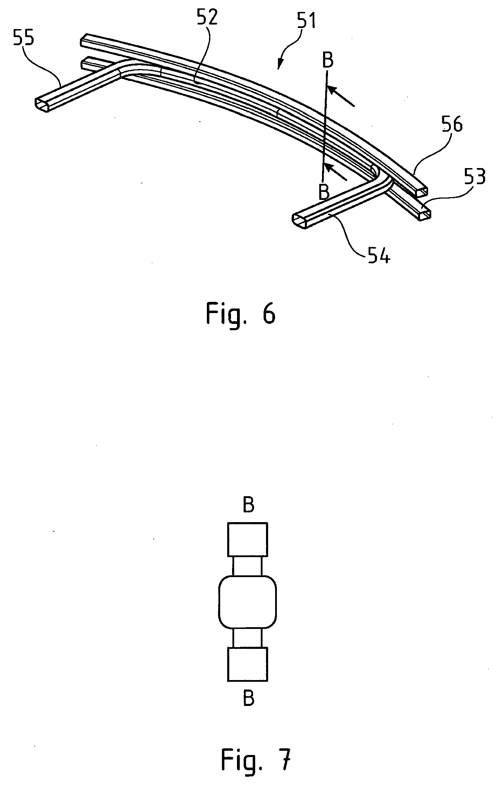

As shown in Fig. 6, there is disclosed a second embodiment of a crash management system 51 seen in a perspective view. Fig. 7 discloses the cross-section configuration of the crash management system, through a line B-B in Fig. 6.

Referring to Fig. 6, the system has a first cross-member 52 and crash absorbing components or crash boxes 54, 55 integrated in one same and single part. Further there is shown a second lower cross-member 53, which is also integrated to the first cross-member. There is also shown a third, upper cross-member 56 that is integrated to the first cross-member.

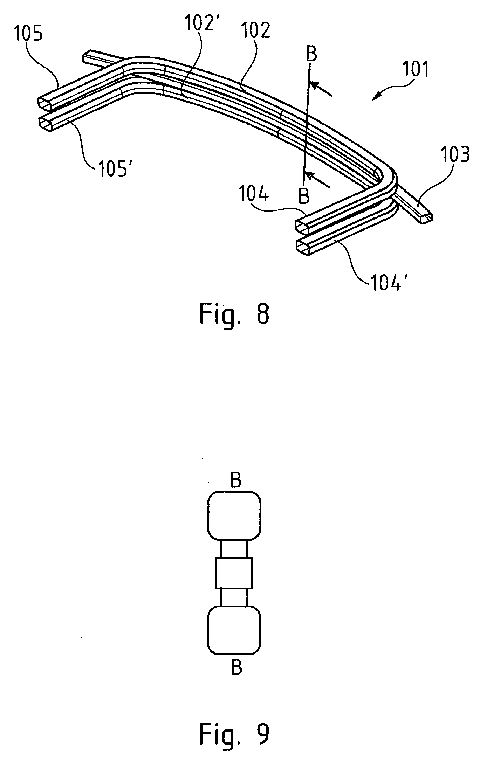

As shown in Fig. 8, there is disclosed a third embodiment of a crash management system 101 seen in a perspective view. Fig. 9 discloses the cross-section configuration of the crash management system, through a line B-B in Fig. 8.

Referring to Fig. 8, the system has a first cross-member 102 and crash absorbing components or crash boxes 104, 105 integrated in one same and single part. Further there is shown a second cross-member 103, which is also integrated to the first cross-member 102, and below same. In addition there is shown a third, lower cross-member 102' that is integrated to the said second cross-member 103 and further having crash absorbing components or crash boxes 104', 105' integrated in one same and single part.

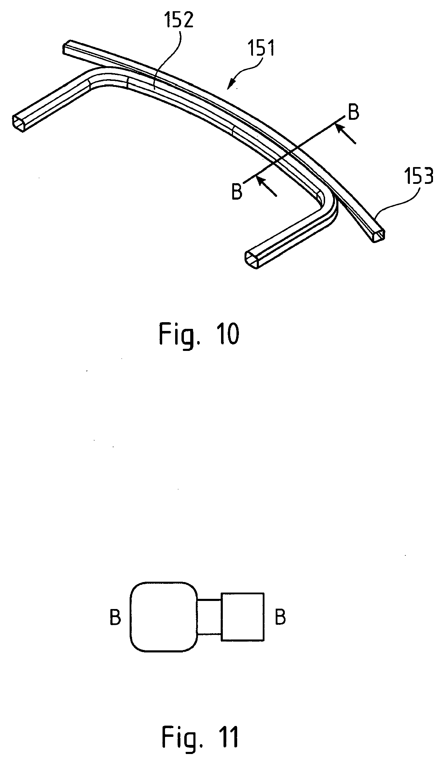

As shown in Fig. 10, there is disclosed a fourth embodiment of a crash management system 151 seen in perspective. Fig. 11 discloses the cross-section configuration of the crash management system, through a line B-B in Fig. 10.

Referring to Fig. 10, the system has a first cross-member 152 and crash absorbing components or crash boxes 154, 155 integrated in one same and single part. Further there is shown a second cross-member 153, which is also integrated to the first cross-member.

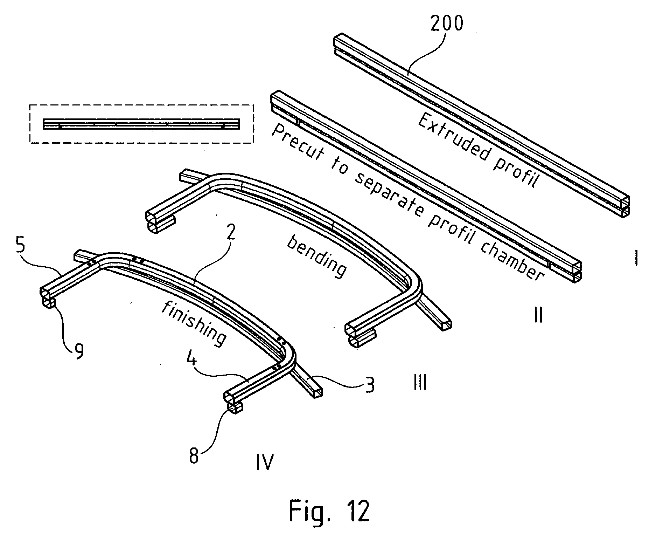

In Fig. 12 there is disclosed a brief overview of the manufacturing process of one crash management system in accordance to the present invention, starting from an extruded section or profile 200 at I.

At II the profile is precut or slit to partly separate one profile chamber from one other.

In step III, the upper part of the profile has been bent backwards at its end regions, to form supporting legs to be attached to a vehicle's frame structure. In the bending process, at least a part of the section that is deformed during bending can be clamped or arrested in a direction perpendicular to the plane of bending. This will influence the folding of said section and also limit the vertical extension of the absorbing member in this area.

It is important to emphasize that the way in which the bending process of the system is done will have a very important influence on the stiffness on the system.

When performing the bending action of one end of the profile, starting from the rectangular section of the extruded profile, an evolutive deformation can be done in one of the walls so that the wall has two crests and one bottom between them.

In a second step, it could be applied simultaneously a deformation (e.g. imprints) in two walls (upper wall and lower wall) of the profile by applying a force to prepare the deformation of the profile in the bending zone. Thereafter a bending of the extremity of the component is performed in such a way that the final form of the component should look as in step III and IV. The same procedure is applied to the other end of the profile.

The most important point out of this final form is that it is ensured that the transversal section is in contact with the longitudinal section. In that manner, the system is as stiff as any other comparable solution known from prior art.

Making imprint(-s) or deformation(-s) before bending has shown to support controllable deformation of the section to be deformed during bending.

In a second embodiment of bending, after an evolutive deformation has been done in one of the walls so that the wall has two crests and one bottom between them, an imprint can be applied in the rear wall of the profile (not shown). In a subsequent step, the profile is bent while having a mandrel inside.

The lower part is slightly bent to have a shape that can be conform with the inner the facia of the vehicle's front and/or for load carrying demands. This cross-member can advantageously carry other modules, such as lights, cooler, air duct, etc.

Step IV is a finishing step, where mounting holes and for sensors, attachment bolts etc has been made in the relevant parts of the system.

The crash management system formed here is similar to that of Fig. 3, with a first cross-member 2 and crash absorbing components or crash boxes 4, 5 integrated in one same and single part together with a second cross-member 3. In addition there is shown enlargements 8, 9 at the ends of the crash absorbing components 4,5 respectively, due to the manufacturing process. The enlargements gives an opportunity to increase the connecting surface with the vehicle, as well as stiffness in the said area of the system.

Preferably the crash management system is made out of aluminium or an Al-alloy, in particular age hardening alloys of 6xxx, for instance AA6063 or 7xxx alloys such as AA7003.

As can be seen from Fig 13, it discloses a crash management system similar to that of Fig. 8, in a first embodiment adapted for airflow to pass through the system. Here the second cross-member 103 which is arranged between the first cross-member 102 and the third, lower cross-member 102', is partly cut away from the lower cross-member 103 and compressed in its vertical direction to allow an air flow AF to pass through the crash management system.

Fig. 14 discloses in an enlarged view, a cross-section configuration of the crash management system shown in Fig. 13, where a web w', w" between the cross-member 103 and 102' has been cut to allow the forming of cross-member 103.

Fig. 15 discloses in an enlarged view, a first alternative cross-section configuration of the crash management system shown in Fig. 13, were a web w', w" between the cross-member 102 and 103 has been cut to allow the forming of cross-member 103.

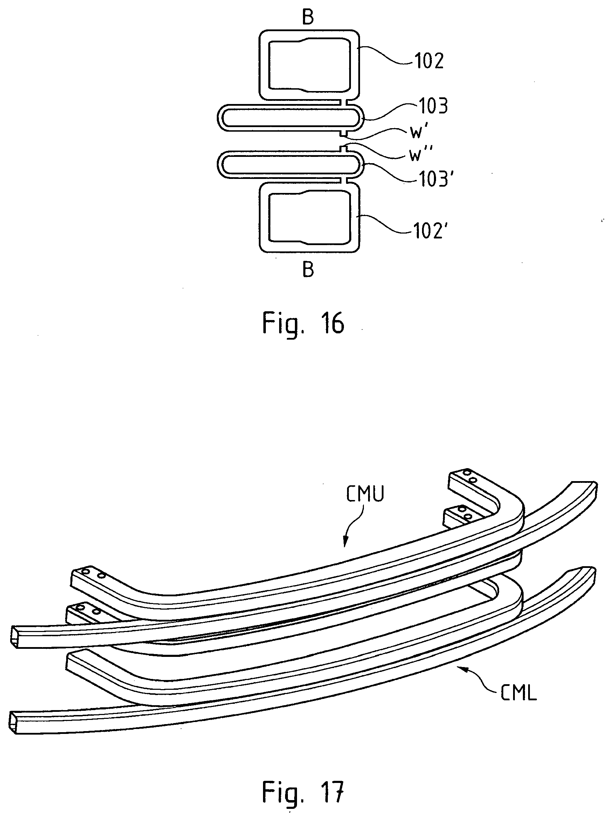

Fig. 16 discloses in an enlarged view, a second alternative cross-section configuration of a crash management system similar to that shown in Fig. 13, however having two intermediate cross-members 103, 103'. As in the foregoing, a web w', w" has been cut to allow the spacing between the cross-members 103, 103'.

Fig. 17 discloses two crash management systems arranged at different vertical levels, one at an upper level, CMU, and one at one lower level, CML. The upper system can be of the type described in Fig. 8, while the lower system can be similar to that of Fig. 3.

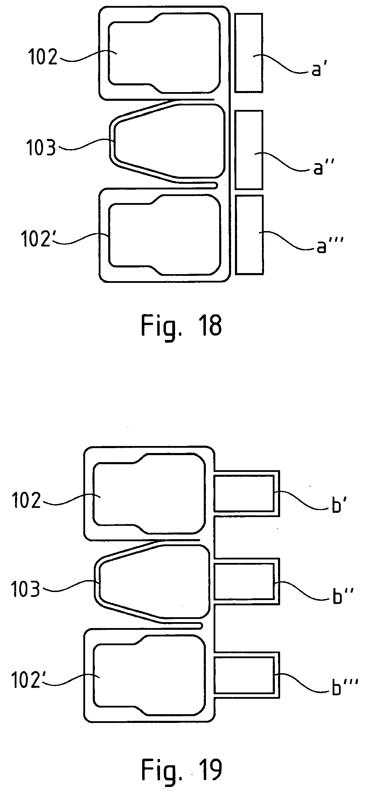

Fig. 18 discloses a cross-section through a crash management system having absorbing components attached thereto. The system has mainly three cross-members , similar to the embodiment of Fig. 8. The cross-members 102, 103, 102' have absorbing components a', a", a'" attached to them respectively. Such absorbing components may be provided by any appropriate material such as foam, rubber, etc.

Fig. 19 discloses a cross-section through a crash management system having absorbing components integrated therein. The cross-members 102, 103, 102' have absorbing components b', b", b"' integrated to them respectively. Such absorbing components are in this embodiment provided by relatively soft closed hollow section cross-members, preferably made as a part of the profile blank.

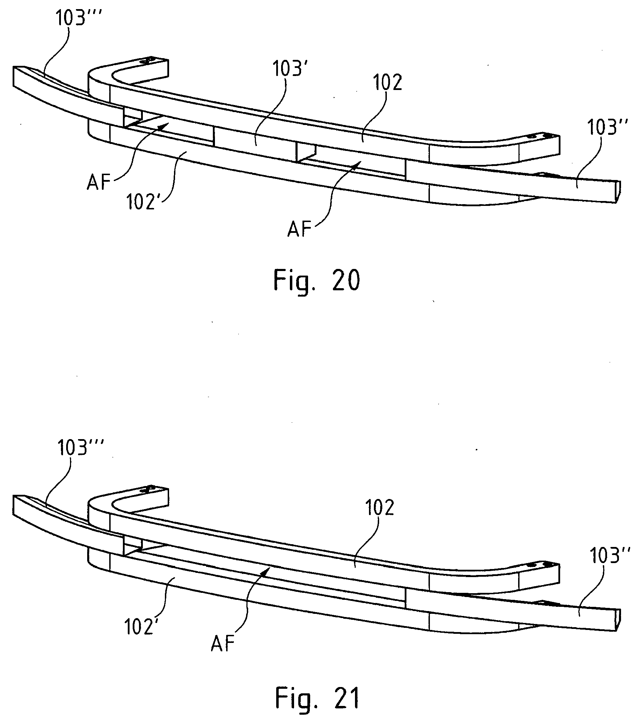

Fig 20 discloses a crash management system similar to that of Fig. 8, in a second embodiment adapted for ventilation. Here two openings for air flow AF are arranged between the first cross-member 102 and the third, lower cross-member 102'. The intermediate cross-member (or second cross-member) is cut and partly removed, leaving sections 103', 103", 103"' behind.

Fig 21 discloses a crash management system similar to that of Fig. 8, in a third embodiment adapted for air flow. Here one opening for air flow AF is arranged between the first cross-member 102 and the third, lower cross-member 102'. The intermediate cross-member (or second cross-member) is cut and partly removed, leaving sections 103", 103"' behind.

## Claims

1. Crash management system for a vehicle including at least one first cross-member (2, 52, 102, 152) and two crash absorbing components (4, 5),
wherein it further comprises a second or more cross-members (3, 53, 103, 153) integrated with said first cross-member (2, 52, 102, 152),
wherein the second cross-member (3, 53, 103 153) extends beyond the first cross-member (2, 52, 102, 152) in the transverse direction of the vehicle,
**characterized in that**
the first and second cross-members (2, 3, 52, 53, 102, 103, 152, 153) are made from a single extruded profile having profile chambers,
wherein the crash absorbing components (4, 5), the first cross member (2, 52, 102, 152) and the second cross-member (3, 53, 103, 153) are integrated in the one same and single profile and are made from the profile chambers,
wherein one profile chamber is partly separated from one other profile chamber,
wherein the crash absorbing components (4, 5) of the first cross-members (2, 52, 102, 152) are formed by bending the ends of the first cross-member (2, 52, 102, 152),
wherein the second cross-member (3, 53, 103, 153) is arranged below or above said first cross-member (2, 52, 102, 152).

2. Crash management system in accordance to claim 1,
**characterised in that**
it comprises a third cross-member (56) similar to the second cross-member (3, 53, 103, 153) and first cross-member (2, 52, 102, 152) which is arranged in between the second (3, 53, 103, 153) and third cross-member (56).

3. Crash management system in accordance to claim 1,
**characterised in that**
it comprises an additional cross-member (102') with two crash absorbing components (104', 105').

4. Crash management system in accordance to claim 3,
**characterised in that**
the two cross-members (102 ; 102') with two crash absorbing components (104, 105 ; 104', 105') have a second (103) or more cross-members between them.

5. Crash management system in accordance to claim 4,
**characterised in that**
a second (103) or third cross-member (103') is compressed in its vertical direction in a transversal mid-region.

6. Crash management system in accordance to any preceding claim 1- 5,
**characterised in that**
the cross-members (2, 3, 52, 53, 102, 102', 103, 103', 152, 153) are made out of an aluminium extruded material.

7. Crash management system in accordance to claim 1,
**characterised in that**
at least one cross-member (102, 103, 102') has at its front side a impact absorbing component (a', a", a'" ; b', b", b"') that is softer than the cross-member, for pedestrian protection.

## Patentansprüche

1. Crashmanagementsystem für ein Fahrzeug mit mindestens einem ersten Querelement (2, 52, 102, 152) und zwei crash-aborbierenden Komponenten (4, 5),
wobei es ferner ein zweites oder mehr Querelemente (3, 53, 103, 153) umfasst, das oder die mit dem ersten Querelement (2, 52, 102, 152) integriert ist oder sind,
wobei das zweite Querelement (3, 53, 103, 153) sich über das erste Querelement (2, 52, 102, 152) hinaus in Querrichtung des Fahrzeugs erstreckt,
**dadurch gekennzeichnet, dass**
das erste und das zweite Querelement (2, 3, 52, 53, 102, 103, 152, 153) aus einem einzelnen extrudierten Profil mit Profilkammern hergestellt sind,
wobei die crash-aborbierenden Komponenten (4, 5), das erste Querelement (2, 52, 102, 152) und das zweite Querelement (3, 53, 103, 153) in dem einen gleichen und einzelnen extrudierten Profil integriert sind und aus den Profilkammern gebildet sind,
wobei eine Profilkammer teilweise von einer anderen Profilkammer getrennt ist,
wobei die crash-aborbierenden Komponenten (4, 5) der ersten Querelemente (2, 52, 102, 152) durch Abbiegen der Enden des ersten Querelements (2, 52, 102, 152) gebildet sind,
wobei das zweite Querelement (3, 53, 103, 153) unterhalb oder oberhalb des ersten Querelements (2, 52, 102, 152) angeordnet ist.

2. Crashmanagementsystem nach Anspruch 1, **dadurch gekennzeichnet, dass** es ein drittes Querelement (56) umfasst, das dem zweiten Querelement (3, 53, 103, 153) und dem ersten Querelement (2, 52, 102, 152) ähnlich ist, welches zwischen dem zweiten (3, 53, 103, 153) und dem dritten Querelement (56) angeordnet ist.

3. Crashmanagementsystem nach Anspruch 1, **dadurch gekennzeichnet, dass** es ein weiteres Querelement (102') mit zwei crash-aborbierenden Komponenten (104', 105') umfasst.

4. Crashmanagementsystem nach Anspruch 3, **dadurch gekennzeichnet, dass** die beiden Querelemente (102; 102') mit zwei crash-aborbierenden Komponenten (104, 105; 104', 105') ein zweites (103) oder mehr Querelemente zwischen ihnen aufweisen.

5. Crashmanagementsystem nach Anspruch 4, **dadurch gekennzeichnet, dass** ein zweites (103) oder drittes Querelement (103') in einem mittleren Querbereich in seiner vertikalen Richtung zusammengedrückt ist.

6. Crashmanagementsystem nach einem der vorhergehenden Ansprüche 1 bis 5, **dadurch gekennzeichnet, dass** die Querelemente (2, 3, 52, 53, 102, 102', 103, 103', 152, 153) aus einem extrudierten Aluminiumwerkstoff hergestellt sind.

7. Crashmanagementsystem nach Anspruch 1, **dadurch gekennzeichnet, dass** mindestens ein Querelement (102, 103, 102') an seiner Vorderseite eine stoßabsorbierende Komponente (a', a", a"'; b', b", b"') aufweist, die zum Schutz von Fußgängern weicher als das Querelement ist.

## Revendications

1. Système de gestion d'accident pour un véhicule incluant au moins un premier élément transversal (2, 52, 102, 152) et deux composants absorbant les chocs (4, 5), dans lequel il comprend en outre un deuxième ou plusieurs éléments transversaux (3, 53, 103, 153) intégrés avec ledit premier élément transversal (2, 52, 102, 152),
dans lequel le deuxième élément transversal (3, 53, 103, 153) s'étend au-delà du premier élément transversal (2, 52, 102, 152) dans la direction transversale du véhicule,
**caractérisé en ce que**
les premier et deuxième éléments transversaux (2, 3, 52, 53, 102, 103, 152, 153) sont faits à partir d'un unique profilé extrudé ayant des chambres de profilé,
dans lequel les composants absorbant les chocs (4, 5), le premier élément transversal (2, 52, 102, 152) et le deuxième élément transversal (3, 53, 103, 153) sont intégrés dans le même et unique profilé et sont faits à partir des chambres de profilé,
dans lequel une chambre de profilé est en partie séparée d'une autre chambre de profile,
dans lequel les composants absorbant les chocs (4, 5) des premiers éléments transversaux (2, 52, 102, 152) sont formés en pliant les extrémités du premier élément transversal (2, 52, 102, 152),
dans lequel le deuxième élément transversal (3, 53, 103, 153) est agencé au-dessous ou au-dessus dudit premier élément transversal (2, 52, 102, 152).

2. Système de gestion d'accident selon la revendication 1,
**caractérisé en ce que**
il comprend un troisième élément transversal (56) similaire au deuxième élément transversal (3, 53, 103, 153) et un premier élément transversal (2, 52, 102, 152) qui est agencé entre le deuxième (3, 53, 103, 153) et le troisième élément transversal (56).

3. Système de gestion d'accident selon la revendication 1,
**caractérisé en ce que**
il comprend un élément transversal supplémentaire (102') avec deux composants absorbant les chocs (104', 105').

4. Système de gestion d'accident selon la revendication 3,
**caractérisé en ce que**
les deux éléments transversaux (102 ; 102') avec deux composants absorbant les chocs (104, 105 ; 104', 105') ont un deuxième (103) ou plusieurs éléments transversaux entre eux.

5. Système de gestion d'accident selon la revendication 4,
**caractérisé en ce que**
un deuxième (103) ou un troisième élément transversal (103') est comprimé dans sa direction verticale dans une région transversale intermédiaire.

6. Système de gestion d'accident selon n'importe quelle revendication 1 à 5 précédente, **caractérisé en ce que**
les éléments transversaux (2, 3, 52, 53, 102, 102', 103, 103', 152, 153) sont faits d'une matière d'aluminium extrudé.

7. Système de gestion d'accident selon la revendication 1,
**caractérisé en ce que**
au moins un élément transversal (102, 103, 102') a au niveau de son côté avant un composant d'absorption de choc (a', a", a"' ; b', b", b"') qui est plus mou que l'élément transversal, pour la protection des piétons.
